# EUROPEAN PATENT APPLICATION

(11) **EP 2 792 239 A1**
(43) Date of publication of application: **22.10.2014**
(21) Application number: 14164342.9
(22) Date of filing: 11.04.2014
(51) Int. Cl.: A01M 1/02

(54) **Device for controlling insects**

(30) Priority: 14.04.2013 IL 22573713
(71) Applicant: Israely, Nimrod, 7193000 D.N. Modi'in (IL); Mindal, Enrique, 7524101 Rishon Le Zion (IL)
(72) Inventor: Israely, Nimrod, 7193000 D.N. Modi'in (IL); Mindal, Enrique, 7524101 Rishon Le Zion (IL)
(74) Representative: Duffy, Assumpta Dympna

(57) **Abstract**

The present invention relates to a device for monitoring or mass trapping of insects. The device may be used in agriculture for controlling or monitoring insects in crops subject to infestation.

## Description

### TECHNOLOGICAL FIELD

The present invention relates to a device for monitoring or mass trapping of insects. The device may be used in agriculture for controlling or monitoring insects in crops subject to infestation.

### PRIOR ART

References considered to be relevant as background to the presently disclosed subject matter are listed below:
- US 6,708,445
- US 3,727,840
- US 5,359,808
- WO 94/09624
- US 5,134,802
- CN 2012/94817

Acknowledgement of the above references herein is not to be inferred as meaning that these are in any way relevant to the patentability of the presently disclosed subj ect matter.

### BACKGROUND

Spraying crops with insecticides is still a prevailing means for controlling insect infestation of crops. However, largely in view of the significant undesired environmental impact of such means, alternative ones are increasingly being sought and used. Such alternative insect control methods are disclosed in the above-listed prior art. Among such disclosed methods are mass trapping. Trapping is also used to monitor insect infestation by counting all trapped insects.

### GENERAL DESCRIPTION

In accordance with the invention, a new insect trap is provided that is both useful for monitoring insect infestation of a crop in a cultivated area and also useful for mass trapping of insects. Provided by the invention is a trap that includes an enclosure defining a trapping space with openings to permit the entry of insects into the trapping space. A dispenser that can hold and release a semiochemiocal for attracting insects into its environment is disposed within the trapping space thereby trapping the insects entering the trapping space. The dispenser may also contain an insecticide. Alternatively, the insecticide may be placed in another location within the trapping space. The trap according to the invention also includes, as illustrated below, markings on a bottom surface of the enclosure and optionally also on its side walls for determining the amount of insects trapped within the enclosure and thus gauging the extent of insect infestation. Generally, as will be appreciated, such monitoring is important for proper insect control planning.

Provided, by a first aspect of the invention, is an insect trapping device comprising an enclosure that defines a trapping space, the enclosure having a bottom wall with a patterned surface; and comprising a dispenser containing a semiochemical and optionally an insecticide, housed within said enclosure. The pattern on the enclosure's bottom wall divides the bottom wall's inner surface into a plurality of polygonal surface elements that are of assistance in counting dead insects on that surface. The enclosure also has openings formed in the side walls that are of a size to permit entry of insects. The position and size of the openings are typically such that a majority of insects, after entering the enclosure, will not be able to exit before being poisoned or starved by lack of nutrition. The openings may be designed to be in the form of an inverted cone when looking from the outside, i.e. a regular shaped cone from the inside towards the outside. The dispenser holds a semiochemical (e.g. in a liquid, solid or gel formulation) and can release it in a controlled manner into its surroundings thereby attracting insects into the enclosure, that defines the trapping space.

The property of releasing the semiochemical in a controlled manner denotes that the semiochemical is not released all at once but rather is released over a time period, e.g. over several days, weeks or several months and exerts its insect attracting function over such a time period.

By another embodiment, the semiochemical and the optional insecticide may be formulated into a solid or gel form together with solidifying auxiliaries and held within the trapping space. Such a solid form releases its contents, the semiochemical and the optional insecticide in case present, over time. In case the optionally insecticide and semiochemical are formulated into solid or gel form, the material housing them is also held by a clamping arrangement for holding the material. Alternatively, the material housing the optionally insecticide and semiochemical may be attached by other means to the top portion of the trapping space.

By one embodiment, the dispenser holds in addition to the semiochemical, an insecticide, and releases it into the environment within the trapping space to thereby exterminate trapped insects. The semiochemical and the insecticide may be included in the same or a different formulation. By another embodiment a second, insecticide-dispensing dispenser or other means for housing the insecticide is housed within the enclosure for releasing the insecticide within the trapping space. According to another embodiment a material situated close to the inner walls of the trapping space along the entire circumference is placed, the material being socked with an insecticide and/or semiochemical. According to this particular embodiment, the material may be wax, that generally releases the socked material relatively slowly, the material may be rubber specially designed for releasing pheromones, it may be paper, cardboard or wood. Other measn for controlled release may be coating the material with a membrane that allows controlled release. Such a material may contain different colors at its inner part facing the trapping space and outer part for attracting insects through the transparent walls. It may also contain a picture on its outer part for attraction. In another embodiment the insecticide and/or semiochemical may be placed in complexes such as cyclodextrins that allow their controlled release to the trapping space. It should, however, be noted that even without an insecticide there may be effective trapping, as trapped insects will eventually die. In the following the invention will be described, for simplicity with reference to use of a single dispenser that dispenses either only the semiochemcial or both the semiochemcial and the insecticide, it being understood that this is not intended to be limiting in any way and the description applies, *mutatis mutandis,* also to the use of separate semiochemcial and insecticide dispensers.

The dispenser, by one embodiment, holds a liquid formulation and has an upward-facing opening. The dispenser of this embodiment may be a small bottle, typically made of plastic, having a closure that is removed prior to deployment of the device. The dimensions of the opening are made such so as to ensure slow evaporative release of the formulation through the opening over an extended period of time. It should be noted that such slow-release of the semiochemical essentially through evaporation of the liquid is one of many controlled-release solutions that are known in the art. Other examples may provide a variety of solid or gel formulations that can release some volatile semiochemcial disposed therein. By another example, the liquid is designed to flow from the dispenser into a dish and the volatile semiochemical is released from such dish. By a further example, the dispenser includes a porous evaporation surface soaked with liquid and the semiochemical is released therefrom.

The dispenser is typically held by a suitable holder within the enclosure. The holder may, by one embodiment, be a member that extends between two opposite walls of the enclosure, typically integral with the walls, and having a clamping arrangement for holding at a portion of the dispenser, e.g. the neck of a dispenser bottle.

By one embodiment, the enclosure comprises an upper part and a lower part that are detachably connected to one another. Thus, for monitoring of the dead insects lying on the bottom surface, the two parts may be detached and the insects relatively easily counted.

The polygonal surface elements are typically rectangular and are defined by right-angled parallel lines, e.g. one set of lines typically equidistant from one another and parallel to one side of the device; and another set of parallel lines typically equidistant from one another and normal to the first set of lines. The pattern of the polygonal surface elements is typically defined by three-dimensional (3-D) markings on the surface. Such markings may be formed by elongated abutments or grooves.

By one embodiment, the upper part of the device is made of a transparent or translucent material which is detachably attached to a bottom part which may or may not (typically the latter) be made of a transparent or translucent material.

The device is typically made out of a plastic material.

By one embodiment also the side walls comprise vertical scale marks. Such scale marks permit, in case of mass trapping, to gauge the amount of trapped insects by determining the level of the mass of dead insects piled up on the bottom surface.

In order to improve the luring efficiency of the device, it may be colored with colors having an insect attractant property, for example yellow in the case of fruit flies. Possibly, also, the device may be colored with a pattern of two or more colors, for example with a combination of yellow and red.

As can be appreciated, the device is typically provided with means for fixing it to a structure or a tree, e.g. by hanging.

By another aspect the invention provides a method for controlling insects in an area. The method comprises deploying one or more devices of the kind disclosed above in an area where control is to be affected and maintaining it in said area for a time period sufficient for said control. As can be appreciated, the released properties of the semiochemical and the optional insecticide from the dispenser may be designed to last for at least said time period. Another option is to replenish the dispenser with a formulation that comprises the semiochemical, the insecticide or both, as the case may be; or replacing the used dispenser with a new one.

The invention provides by further aspects a method for monitoring insects in an insect-infested crop area that comprises a dispensing device of the kind described above and counting or gauging the amount of trapped insects within said enclosure with the aid of the bottom surface pattern.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** is an upper perspective view of a trapping device in accordance with the invention.
**Fig. 2** shows a view from above of a trapping device according to the invention with a transparent upper part.
**Fig 3** is a side view of the trapping device in the direction of arrow III in Fig. 2.
**Fig 4** is also a side view of the trapping device from the direction of arrow IV.
**Fig 5** shows a cross-section through lines A-A.
**Fig 6** shows a cross-section though lines B-B in Fig. 4.
**Fig 7** is a bottom view of the trapping device.

### DETAILED DESCRIPTION OF EMBODIMENTS

### Definitions

*Semiochemical*: a chemical substance or mixture that carries a message within or between species. Non limiting examples are pheromones, allomones, kairomones, and food based attractants. Non limiting examples of food based attractants are carbohydrates, protein hydrolisate, ammonia, fermenting volatile materials and decomposed volatile materials.

*Insecticide*: any substance that affects insects and invertebrates either killing them or preventing them from harming crops. By prevention it is meant affecting their fertility or their neurological behavior, such as causing paralysis. These are chosen among synthetic or natural including botanical (pyrethrum, nicotine, rotenone, neem, limonne, d-limonene), systemic or contact insecticides. Non limiting examples are organophosphates, organochlorines, organosulfur, carbamates, formamidines, dinitrophenols, organotins, pyrethroids, nicotinoids (imidacloprid, acetamiprid, thiamethoxam, nitenpyram, clothianidin, dinotefuran and thiacloprid) spinosyns [spinosad - (Success®, Tracer Naturalyte®)]. More specifically, deltamethrin, piperonil, pyrethroid, organophosphate dichlorvos, borax (sodium borate), malathion, fenthion boric acid, B.T. (Bacillus thuringiesis), cyfluthrin, D.D.T., diazinon, spinozad, acetamiprid, acrinathrin, flonicamid, imidaclopirid, thiacloprid, phloxine b, uranine.

### DETAILED DESCRIPTION OF THE ILLUSTRATED EMBODIMENTS

In the following, the invention will be described relating to the embodiments illustrated in the attached drawings. It should be understood that these embodiments are intended to illustrate the general concept of the invention and are not intended in any way to be limiting.

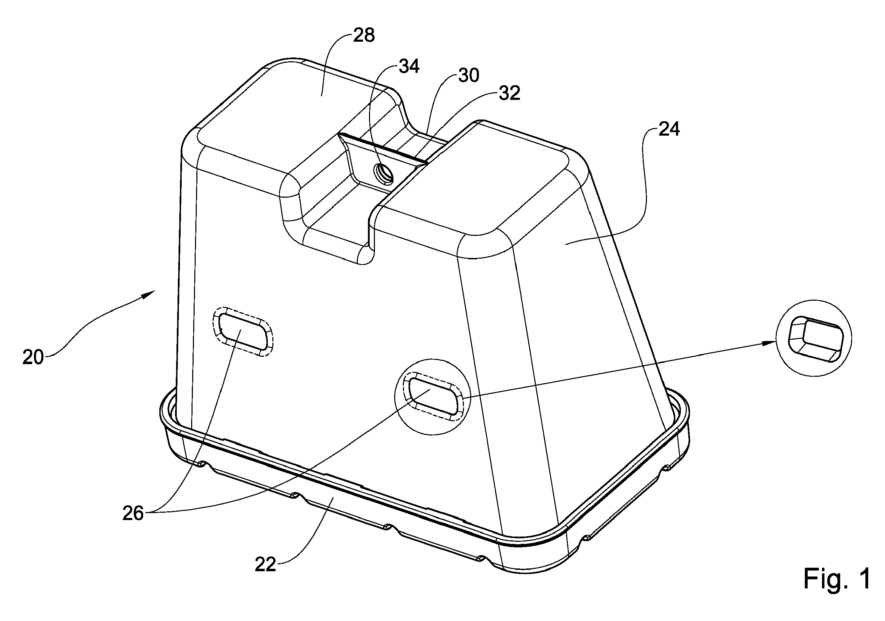

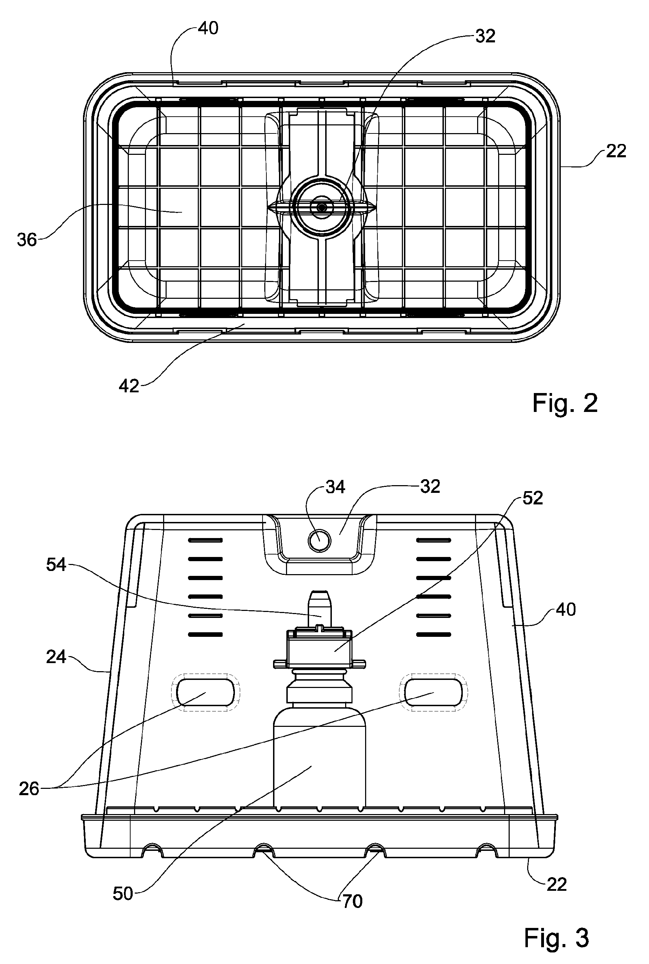

A trapping device **20,** according to an embodiment of the invention, is shown in Fig. 1. Only the external features of the device can be seen. The internal features are similar to those of the trapping device shown in Figs. 2-7. The device shown in Fig. 1 has a bottom part **22** that defines a bottom surface (not shown) and an upper part **24** which snap-fits into the bottom part into the grooves present in the bottom surface and both jointly define inside a trapping space that is not shown. The device has openings **26** in its side walls. Two such openings are shown, there being similar openings on the opposite face of the upper part. It should also be appreciated that having two openings is but an example and there may be different numbers of openings at each side including ranging from 1, 3, 4, etc. Likewise, there may be openings on different walls as well. The size of openings **26** is designed to be sufficiently large to permit entry of insects into the trapping space. The positions as well as size are such that insects trapped inside will only rarely be able to exit. It is to be noted that ideally the openings are located at mid-level of the side walls. If the openings will be too high, the chances of insects to exit will increase and, if the openings will be too low, the trapping may be less efficient. The openings **26,** as can be seen in the excerpt (showing an inside to outside observation), have an inverted cone shape, i.e. being broad at its interior and narrowing toward the exterior. It was shown that this structure increases the rate at which insects enter into the trapping space.

Furthermore, as can be noted, the upper face **28** of the trapping device has a groove **30** at about its middle with a bridge **32** extending between the opposite faces of the groove and having an opening **34** therein that serves for suspending the device from a structure, a tree, a post, etc. The trapping device of the embodiment of Fig. 1 has opaque or translucent walls, as distinct from the embodiment of Figs. 2-6 that has a transparent upper part. Apart from that, the two embodiments have the same structure and accordingly the same reference numerals used in the embodiment of Fig. 1 will be used to describe corresponding elements in the other Figures. The reader is referred to the above description for understanding of such elements. Furthermore, by transparent it is also meant to include colored transparency, where the colors are those known to attract insects, e.g. yellow green, blue and red colors.

The first thing that is clearly visible in Fig. 2 is that the bottom surface **36** of the trapping device has a pattern of squares defined by a plurality of lines, right-angled to one another. It should be noted that the square is only one example and the pattern may be defined by non-square rectangles as well as other polygonal shapes. The pattern on the bottom surface **36** is formed, in this specific example, by elongated grooves along the surface. However, the pattern may also be formed by printing or by elevated abutments.

This surface pattern is useful for counting attracted and exterminated insects lying on the surface. For counting, a few squares may be sampled at random and this can then be extrapolated or a count obtained for each square and the numbers added up to total each square. The advantage of such a pattern is that it is much easier to count in relatively small areas. Without such a pattern, counting may be much more difficult.

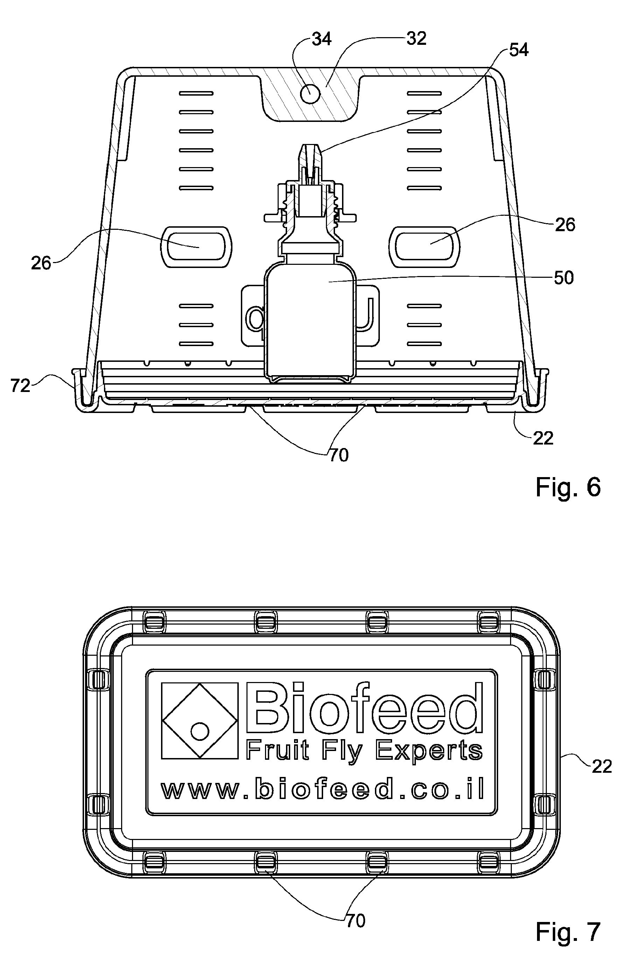

As can be seen in Figs. 3-7, the device of this embodiment has a transparent upper part and non-transparent bottom part. As can further be seen in Figs. 3 and 6, the side walls **40,** 42 bear vertical markings; in the case of mass trapping the exterminated insects will pile up on the surface and such level markings will allow to easily gauge the number of insects trapped inside without the need for counting exterminated insects. This may permit to estimate the extent of infestation or change from one measure to another may permit to determine the efficacy of the control.

Held within the trapping space of the device is a dispenser bottle **50** that can be seen in Figs 3-6. The bottle holds a liquid formulation that typically comprises both a volatile semiochemical and a volatile insecticide. Prior to deployment, a closure **52,** seen in Fig. 3, is removed for gradual evaporation through the bottle's opening **54,** both the semiochemical and the insecticide are released into the trapping space. In this embodiment, the geometry of the opening (including its diameter) and length of the duct leading to the opening controls the rate of evaporation. Thus, this allows controlled release over a period of at least several weeks.

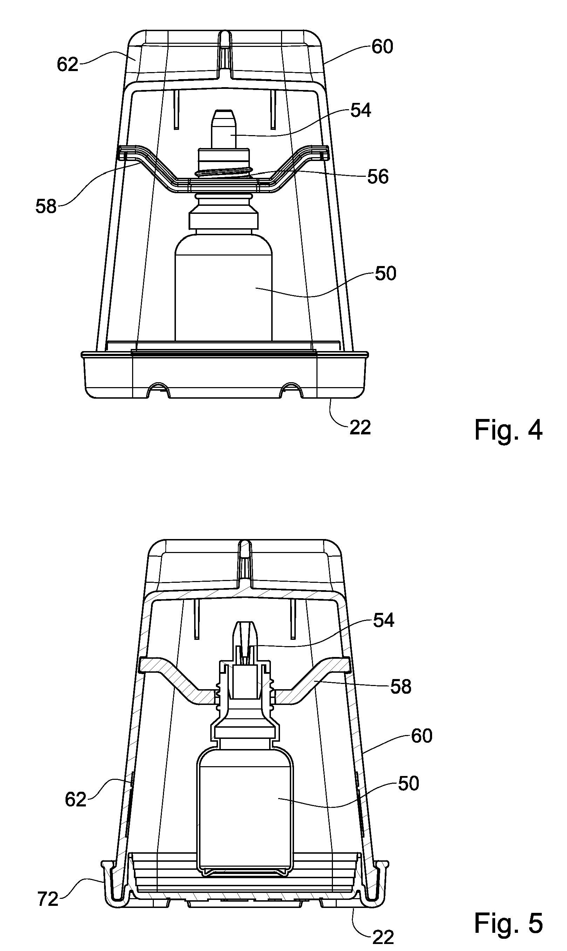

The dispenser bottle **50** is held at its neck **56** by a member **58** that extends between and is integral with two opposite side walls **60, 62** and snap-fits into the bottle's neck **56** as can be seen in Fig. 4. This same member 58 or a modification thereof may be used for holding the material in case the optionally insecticide and semiochemical are formulated into solid or gel form and placed on a material housing them. The bottom part **22** includes a number of peripheral openings **70** (Fig. 3) which serve for the purpose of draining water coming from irrigation or rain and flows on the side walls and into the folded skirt portion **72** (Fig. 5). One of the advantages of a device of this embodiment is that the same device can be used for both mass trapping and monitoring. Not shown in the figures, although within the scope of the present invention are alternatives to the use of the dispenser bottle. Thus the semiochemical and the optional insecticide may be formulated into a solid form such as a tablet or capsule by mixing them with organic or aqueous solvents and a stabilizing agent selected from cellulose derivatives, gelatin, tectin, polysiloxane and the solid form is screwed to the member 58. Alternatively, the semiochemical and/or the insecticide may be in the form of a solid or may be impregnated in a suitable substrate and located in a position within the trapping space such that trapped insects will contact them and die as a result of such contact. Such suitable substrate may be natural or synthetic material, usually in the form of a fabric, a cloth, a paper or cardboard, a screen or any material that is capable of absorbing and maintaining the semiochemical and/or the insecticide. Thus independently of one another the semiochemical and the insecticide may be each a solid a liquid or impregnated on a suitable substrate and may be in the same dispenser, solid or substrate or may each be in a separate location or form. In case a large quantity of semiochemical and the optional insecticide are required, the bottom surface 36 may be filled with the semiochemical and the optional insecticide.

## Claims

1. An insects' trapping device, comprising
an enclosure defining a trapping space having a bottom wall with a patterned surface, the pattern dividing the bottom wall's inner surface into a plurality of polygonal surface elements, and having openings formed in side wall thereof of a size permitting entry of the insects into the trapping space; and
a semiochemical dispenser disposed within said enclosure and for releasing in a controlled manner the semiochemical into the trapping space and into its surroundings.

2. The device of claim 1, wherein said enclosure comprises an upper part and bottom part detachably connected to one another.

3. The device of claim 1 or 2, wherein the polygonal surface elements are rectangular.

4. The device of any one of the preceding claims, wherein the pattern is defined by three-dimensional (3-D) markings on the surface by elongated abutments or grooves.

5. The device of any one of the preceding claims, wherein said openings are in a shape of an inverted cone, are positioned and of a size such that majority of the insects, after entering the enclosure, will not be able to exit.

6. The device of any one of the preceding claims, wherein an upper portion of the enclosure is made of a transparent or translucent material.

7. The device of claim 6, wherein said enclosure comprises a transparent or translucent upper part detachably attached to bottom part.

8. The device of any one of the preceding claims, wherein the side walls comprise vertical scale marks.

9. The device of any one of the preceding claims, wherein said dispenser is a bottle with a closure that is removed prior to deployment of the device.

10. The device of any one of the preceding claims, wherein said dispenser is a solid form or a substrate impregnated with semiochemical and the optional insecticide.

11. The device of any one of the preceding claims, wherein said controlled manner is release over an extended time period.

12. The device of any one of the preceding claims, wherein said dispenser can also release an insecticide into said trapping space.

13. The device of any one of the preceding claims wherein the semiochemical and the optional insecticide are independently comprised in a liquid formulation.

14. A method for controlling insects in an area, comprising deploying one or more devices according to any one of the preceding claims in said area and maintaining the device in said area for a time period sufficient for said control, where said dispenser releases said semiochemical over at least said time period.

15. A method for monitoring insects that infest crop in an area, comprising, deploying one or more devices according to any one of claims 1-14 in said area; and periodically counting or gauging the amount of trapped insects in said enclosure with aid of the bottom surface pattern.
